# EUROPEAN PATENT APPLICATION

(11) **EP 1 731 424 A1**
(43) Date of publication of application: **13.12.2006**
(21) Application number: 05012436.1
(22) Date of filing: 09.06.2005
(51) Int. Cl.: B64G 1/36, B64G 1/64, B64G 1/10

(54) **Engine module for attachment to a target spacecraft, in-space servicing system and method for operating an engine module**

(71) Applicant: Intersecure Logic Limited, 1087 Nicosia (CY)
(72) Inventor: Kosmas, Charalampos, 163-43 Ilioupolis (GR)
(74) Representative: Tergau & Pohl Patentanwälte

(57) **Abstract**

An engine module (4) for attachment to a selected target spacecraft (2) should be designed such that the overall need for processing resources and power may be further reduced. According to the invention, the engine module (4) comprises a number of sensors (22) adjusted to pick up measured values of a number of physical parameters of the target spacecraft (2), said sensors being connected with a converter unit (26) which is set up to convert a time profile of the measured values into a set of processable data.

## Description

The invention relates to a sensory apparatus for attachment to a target spacecraft and further on to a sensory apparatus driven engine module for attachment to a selected target spacecraft. It furthermore relates to a servicing system for providing in-space service operations to a selected target spacecraft and to a method for operating an engine module of the kind identified above.

Spacecraft such as artificial satellites typically are intended to orbit a specific celestial body in order to provide their particular service or mission. In the majority of cases, satellites are used in the proximity of earth and in particular in a proximity the teller operation capability is not hindered by long electromagnetic wave propagation times. A spacecraft to be used in this configuration, i. e. in order to serve as a telecommunication satellite, a ground observation satellite or the like, typically is equipped with a number of thrusters or other propulsion means that may be used to keep the spacecraft in a desired target position and altitude.

Typical spacecraft are designed for a so-called designed life time. This "life time" is based upon a statistical definition and typically is associated with a probability of about 98 % that within this time span the spacecraft will function reliably. The average life time of the materials of the spacecraft is much longer, sometimes as much as three times the "designed life time". Most telecommunication satellites have a designed life time of six to 15 years.

For obvious reasons, onboard resources of satellites or spacecraft are limited by available space or load aspects. For this reason, among other things, only limited fuel reserves can be stored on a satellite or a space craft and after consumption of the fuel reserves the satellite or space craft looses its manoeuvrability and is no longer functional. In typical concepts, the onboard fuel reserves the satellite or spacecraft is equipped with are chosen such that sufficient fuel supply will be available for the designed life time, whereas after expiry of this time span fuel reserves will be used up. In this case, the spacecraft is rendered useless and abandoned in space creating an additional problem of potential collision with a future operational spacecraft. Thus, it becomes "space debris".

Fuel-depletion that renders the spacecraft or satellite uncontrollable and therefore useless may happen even earlier than a designed life time of the spacecraft for various reasons such as wrong calculation of the fuel budged, wrong positioning of the satellite due to error, malfunctioning of the launcher, or other rare phenomena. In view of these aspects as well as in view of the recognition that material parameters may allow for much longer life times than typically designed in view of fuel aspects make it highly desirable to provide for a concept that allows for extension of the life time of a satellite by offering servicing or refuelling options. In order to allow for these servicing or refuelling options, German patent DE 102 59 638 discloses a servicing system for providing in-space service operations to a selected target spacecraft.

In this system, several individual components are provided that on the basis of a very low consumption of resources allow for the performance of a variety of service functions to a selected target spacecraft. Among other options, this servicing system comprises a sub-satellite element or engine module that may be delivered and attached mechanically to a client satellite, in particular to the nozzle of the client satellite. In order to keep necessary resources low and limited, the components of the system as disclosed in DE 102 59 638 are designed such that, among other things, the necessary on-board means for communication are rather limited. For this purpose, typical components of the known system are designed such that communication with a ground control station necessary to transmit command data to the components and to transmit the diagnostic data from the components to ground control is carried out using the communication means of the target satellite as a relay station. Specifically, the telemetry channel of the target spacecraft is used for this purpose. This set-up allows the system as disclosed in DE 102 59 638 to operate with short-range telecommunication systems onboard of the individual components only, whereas the installation of high performance, high power load full range telecommunication means on the components of the servicing system is not necessary.

However, in consideration of the fact that the still considerable costs are involved even for simple servicing operations on target satellites, which costs are mainly driven by the necessary mass payloads to be moved and the radiation susceptibility of electronic components included in the relevant set-ups, it is highly desirable to further simplify the components in such a servicing system.

Digital processing of telemetry emitted by the target satellite may also be susceptible to radiation induced errors in the processing chain and increase in this way the risk of wrongful operation of the engine module, especially due to the need to receive and skim through of the totality of the telemetry of the target satellite in order to locate relevant data, which are of small proportion in comparison with the feed through data. This imposes non-linear resource loads. For example, physical limitations in the processing power of current FPGAs would allow for a triple modular redundancy of the control logic of the engine module only in the case where the processing power would be of modest level. Exceeding this level would necessitate the processing power to resort to multiple chip architectures with considerable interface overheads and risks.

It is therefore an object of the present invention to further simplify an engine module that is usable in a servicing system of the known kind. It is another object of the present invention to provide a method for operating an engine module of this type such that the overall need for processing resources and power may be further reduced. It is another object of the present invention to provide a servicing system for providing in-space service operation to selected target spacecraft which may be operated in a further simplified manner.

With respect to the engine module, this object is achieved with a number of sensors adjusted to pick up measured values of a number of physical parameters of the target spacecraft, said sensors being connected with a converter unit which is set up to convert a time profile of the measured values of the physical parameter into a set of processable data. In order to obtain the measured values of the physical parameters, appropriate measurement data may be picked up by the respective sensors. The processable data are generated in appropriate format and the like in order to be processed further in the on-board control unit of the engine module.

The invention is based upon the concept that further simplification of the engine module used in the known servicing system may be achieved by a fundamental reconfiguration of the entire communication concept between the engine module and its environment, particularly the communication channel between a remote control station such as ground control and the engine module. This reconfiguration of the basic communication system is possible since the engine module is intended to be attached to the target spacecraft or satellite and therefore in operable condition is mechanically linked and interconnected with the target spacecraft. This intensive mechanical contact between the attached engine module and the target spacecraft may be used to set up a communication channel to the engine module which operates entirely without the direct use of conventional communication systems based upon the exchange of radiated signals.

Instead, transmission of command signals or other data to the engine module, once it is attached to the target satellite, may be conducted by varying certain physical parameters of the target spacecraft and by incorporating the control signal to be transmitted to the engine module into the time profile of such selected physical parameters of the target spacecraft. In order to communicate these time profiles to the engine module, the engine module is equipped with appropriate sensors that are designed to pick up measurement data or measured values of the selected physical parameter of the target spacecraft. Via these appropriate sensors, the time profile of the selected physical parameter is registered in the control unit of the engine module. There it may be analyzed in order to extract the embedded, appropriately encoded control or diagnosis signal.

The concept of communication via analysis of the time profile of a measured physical parameter may be applied to communicate various types of data to and/or from the engine module. Preferably, this concept of communication is used to transmit command sequences or control data to the engine module, accordingly establishing a control channel between a remote control unit such as ground control and the engine module. In an alternatively or additionally preferred embodiment, the processable data comprises diagnostic data, preferably characteristic for the current status of the satellite. In still another or additionally preferred embodiment, this communication channel can be used to establish communication between several individual engine modules that are attached to the same target satellite, thus creating a communication channel between two or more engine modules via the target satellite. In other words: Both voluntary data intentionally generated such as control or command sequences and involuntary data generated by the satellite in consequence of its current particular situation in the way of diagnosis means can be communicated to the engine module via appropriate time profiles of physical parameters.

In other words: The invention proposes to equip the engine module attached to the target satellite with sensory capabilities that can capture the physical parameters that manifest the execution of certain commands or the occurrence of certain events or situations of the client satellite or detect the lack of these parameters. This information then is converted into commands for execution or diagnosis data for analysis by the engine module. Transitional events therefore can be gathered or continuously observable configurations can be detected.

In a preferred embodiment, a temperature of the target spacecraft or satellite is selected as the physical parameter which is used for transmitting the respective signal to the engine module. In this embodiment, the engine module preferably comprises an appropriate temperature sensor. Other physical parameters that beneficially may be used to transport the desired information are sound, vibrations, acceleration, inductance, capacitance, magnetic or electromagnetic emissions, modulated or un-modulated signals, and/or vacuum energy. Accordingly, in a further preferred embodiment, the number of sensors comprises any combination of sensors for measuring one or more of these parameters.

Since the engine module preferably is designed to be attached to the target satellite by an appropriate grasp holder to be positioned within or about the nozzle of a thruster of the target satellite, the temperature sensor preferably is designed to measure the current temperature in the interior of the nozzle of the target satellite.

Typically, for the purpose of potential activation of the thrusters, the target satellite will be equipped with heating means on the supporting pipe work, thruster valves or combustion chamber of the nozzle, e. g. for thermal control purposes. These heating means according to the preferred embodiment of the present invention may be used and operated in a way that a desired time profile of the temperature within the nozzle of the target satellite is generated. Via the temperature sensors of the engine module, this time profile of the respective temperature is picked up by the control unit of the engine module and within this control unit may be used for further analysis. From the time profile of this temperature parameter, the encoded control or command sequence can be extracted in an appropriate converter unit within the control module of the engine module.

In other words: A proper analysis of the time profile of the temperature as registered by the sensors of the engine module, the embedded control or command sequence may be extracted from these temperature data such that the actual command or control signals are available within the control unit of the engine module.

In other words: The preferred embodiment of the invention based upon the use of a temperature sensor in order to convey command sequences to the engine module is based upon the recognition that the nozzle of the satellite to which the engine module is intended to be attached is equipped with heating elements and also with temperature sensors and a valve. Therefore, a temperature sensor of the engine module probing inside the nozzle can distinguish various discrete levels of temperature values and with the help of a miniaturized ASIC component that has a timer and memory information can interpret the temperature values over time as discrete parts (bits or bytes depending on the encoding) of the tele-command distant to it. The SC-thermal sensor of the nozzle can provide sufficient information, usually with the accuracy of a tenth of a degree centigrade, and so the satellite's thermal control subsystem can effectively be used to accurately generate over a period of time a thermal profile of temperatures that will be distinct enough to constitute an error-free sequence of commands in order to upload to the control ASIC of the engine module that sequence of commands as needed together with the right parameters.

In an alternatively or additionally preferred embodiment, the concept of transmitting command sequences to the engine module is based upon the use of sound and/or vibrations as physical parameters of the target spacecraft. In this preferred embodiment, the number of sensors of the engine module comprises a sound and/or vibration sensor. Sound sensors such as microphones or vibration sensors attached to the nozzle of the target satellite can detect the noisy activation of valves. In particular, the valves installed just before the combustion chamber of the apogee motor can be used for such a purpose because the apogee motor typically receives no fuel after its isolation from fuel reserves by means of special pyro-valves that isolate the flow of propellants to the valves of the chamber after one time use. Accordingly, these valves after original use of the apogee motor are no longer necessary for any functional purposes of the target satellites, and activating these valves will not lead to consumption of fuel even if the satellite still has some fuel reserves. The use of such a channel of information might in a further preferred embodiment be used very efficiently to effect a fire "abort command".

In a further additionally or alternatively preferred embodiment the sensors of the engine module comprise an electromagnetic sensor. In this set-up, electromagnetic emissions coming out of the coil that activate a valve could be sensed by the engine module in order to extract embedded command sequences. Combinations of more than one sensory information could provide a very accurate interpretation about the changes that are happening in the operation of the satellite and therefore be certain about the command manifestation. The examples as identified relate mainly to the use of physical parameters of the target spacecraft that are locally or functionally related to the nozzle of the apogee motor. However, other components or subsystems of the satellite also are intended to receive commands such as thermal subsystems with their many heaters, the use of certain units, the positioning of antennas, solar panels and the like may be used to embed information to be transmitted to the engine module assisting the data transfer to it or the synchronization with the satellite activities.

The concept of the communication with the engine module basically includes the steps of converting the data of a command sequence for the engine module into an appropriate time profile of a selected physical parameter of the target spacecraft such as the temperature within the nozzle of its apogee or other motor, then to operate certain actuators on the target satellite such as the heating elements related to the nozzle of the apogee or other motor in order to generate the desired time profile of the selected physical parameter, then to pick up the generated time profile with appropriate sensors in the engine module, and then to reconvert the measured time profile into the command sequence in an appropriate converter unit in the engine module.

This communication concept basically is a one-directional communication channel that may be used to transmit command sequences and the like from a control station such as ground control to the engine module. In a preferred embodiment, however, the communication system is designed for two-directional use, i. e. for transmitting command sequences or the like from a control module such as ground control to the engine module and to transmit measurement or diagnostic data back from the engine module to the control module or ground control. In order to achieve this bi-directional flow of communication, in a preferred embodiment the engine module is equipped with appropriate means for effecting physical parameters of the target satellite which may then be picked up by onboard detection means of the target satellite. In this preferred embodiment, the engine module further comprises a number of active elements, such as e. g. actuators, set up to effect physical parameters of the target spacecraft.

In a preferred embodiment, the number of active or actuator elements comprises a heating element. Such a heating element, for example, may be placed inside the client or target satellite nozzle and there could generate a thermal profile that is sensed by the sensor elements of the client satellite and thus becomes available to the controllers in ground control. Pressure exerted inside the nozzle could also be read effectively. Alternatively or additionally, the number of active elements preferably comprises means for affecting conductance and/or capacitance and/or vibrations and/or sound and/or electromagnetic parameters.

Alternatively or additionally, acceleration sensors on the satellite could also be used to gather operational data of the engine module. In particular, the thrust impulse as delivered by the engine module might be modulated further into pulse sequences of small duration that could be effectively used to transmit a great amount of digital information about the status of the engine module (tank pressure log battery voltage log, thermal history log, battery depths of charge log) during the generation of the total impulse of a given manoeuvre.

Since communication with the engine module is effected by using the selected physical parameter of the target satellite as transfer medium, the engine module preferably is designed without the use of conventional communication equipment such as radio transmitters antenna and the like. However, in this set-up communicational access to the engine module will be limited to the situation when the engine module is attached or otherwise in functional relation with the target satellite. Accordingly, the engine module is preferably used in the context of an overall servicing system for providing in-space service operations to a selected target spacecraft, in which during the phases in which the engine module is not attached or otherwise in functional connection with the target satellite other means of communication with the engine module are provided.

Preferably, in order to establish reliable communication with the engine module even when it's not attached with the target satellite, the servicing system comprises a transport module for temporary attachment to the engine module, the transport module being equipped with communication means for establishing a direct or indirect communication channel with a ground control module. This transport module in particular may be used to fetch the engine module during approach to the target satellite and to make sure the proper attachment of the engine module with the target satellite is achieved. After the engine module is attached to the target satellite, the transport module with its communication equipment may be disconnected from the engine module and reused for other purposes, in particular for manoeuvring other engine modules or the like to the same or to other target satellites.

With respect to the method for operating an engine module the object is achieved by converting a command sequence for the engine module into a time profile of a selected physical parameter of the target spacecraft, then operating a selected actuator of the target spacecraft such that the time profile of the selected physical parameter is generated, detecting the time profile by sensors of the engine module, and then converting the time profile into the command sequence onboard the engine module.

Preferably, in this concept the temperature of the target spacecraft is selected as the physical parameter to be operated appropriately.

In order to establish the preferred two-directional communication, preferably a data sequence generated in a control unit of the engine module is converted into a time profile of a selected physical parameter of the target spacecraft, selected actuator elements of the engine module are operated such that the time profile of the selected physical parameter of the target spacecraft is generated, and the time profile of the selected physical parameter is detected by onboard means of the target spacecraft and forwarded to a diagnosis unit for further analysis.

According to the invention, information to be exchanged between a control station such as ground control and the engine module is embedded into a characteristic time profile of a selected physical parameter of the target satellite and transferred by appropriate generation and later detection of such characteristic time profiles. This concept is particularly beneficial since it allows to transmit information between the engine module and a control station without the necessity implementation of conventional communication means on the engine module. This concept is particularly beneficial in view of the recognition that the necessary amount of data that needs to be exchanged between the engine module and ground control is rather limited and its transmission may be expanded over a considerable time span. For example, the information to be transmitted to the engine module may be as little as command data specifying the timing of the activation (firing) of the engine module and the duration of the firing. All the rest of the information necessary for manoeuvring the target satellites, namely the orientation of the satellite to direct the thrust in the right orientation vector, can be performed by the satellite alone. Furthermore, this little amount of information that necessarily needs to be transmitted to the engine module may be transmitted in a comparatively large time frame of for example up to two weeks. Accordingly, the use of a relatively inert parameter such as temperature for embedding the relevant information is rendered possible.

An exemplary embodiment of the present invention is explained in greater detail with the reference to the drawings in which:
- Fig. 1: shows a servicing system for providing in-space service operations to a selected target space craft,
- Fig. 2: shows an engine module attached to a target satellite,
- Fig. 3: schematically shows the control unit of the engine module according to Fig. 2, and
- Fig. 4: shows a time profile of a physical parameter.

In all figures, identical parts are provided with identical reference numerals.

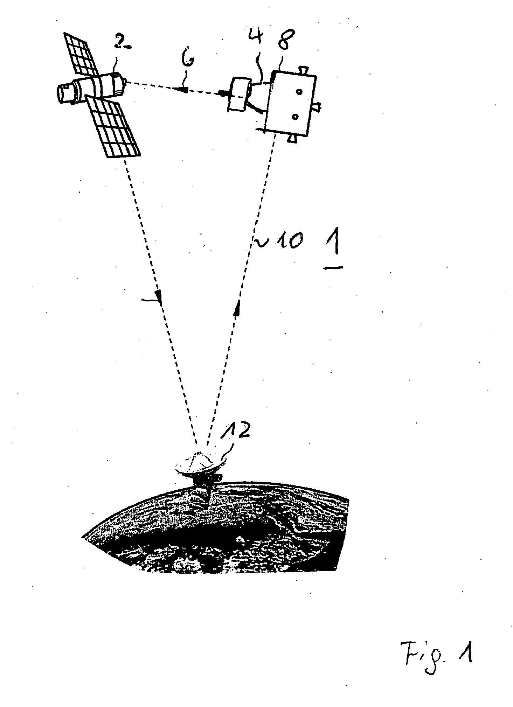

The servicing system 1 according to Fig. 1 is designed to provide in-space operations to a selected target spacecraft 2, in particular a target satellite, at both high reliability levels and low fuel/cost levels. In this context, the servicing system 1 is designed to provide the services both to so-called co-operative (or controllable) targets or to none-co-operative (or none-controllable) targets. The servicing systems 1 in order to fulfil the goal of providing several service operations comprises a number of components such as repair modules or the like that are not shown in Fig. 1. In particular, the servicing system 1 with respect to the variety of its components may be of the kind as disclosed in German patent DE 102 59 638 the disclosure of which is incorporated by reference.

Among other components, the servicing system 1 comprises an engine module 4 that may be attached to the selected target satellite or target spacecraft 2 in order to replace or complement onboard thrusters or propulsion means of the target spacecraft 2. The engine module 4 is designed with the goal of keeping fuel/cost levels and particularly its mass load very low. For this purpose, among other things the engine module 4 is designed without using conventional communication equipment such as radio transmitters or receivers, antenna or the like.

In Fig. 1 the servicing system 1 is shown in a face where the engine module 4 is delivered to the selected target spacecraft 2 along an approach line 6 for later attachment to the target spacecraft 2. Since the engine module 4 is not equipped with communication means, in this face it is connected or attached temporarily to an escort module 8, also referred to as escort agent (e. a.). The escort module 8 is equipped with all necessary communication means and is designed to establish a communication channel 10 with ground control station 12. By using the escort module 8, the engine module 4 can be manoeuvred and positioned appropriately to enable proper attachment to the target satellite 2. After the engine module 4 has been properly delivered to the target spacecraft 2, the escort module 8 may be disconnected from the engine module 4 and used for other purposes such as manoeuvring of other engine modules 4 or other components of the servicing system 1.

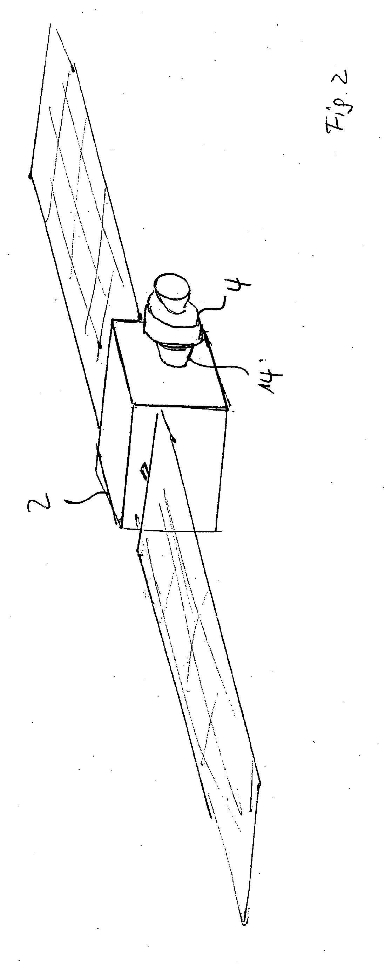

In Fig. 2, the engine module 4 is shown in a docked status, i. e. attached to the target spacecraft 2. For attachment purposes, the engine module 4 on its front tip comprises a grasping facility like a grass arm or the like which may be introduced into the nozzle 14 of the apogee motor of the target spacecraft 2. In this configuration, the attached status, the engine module 4 may be used to replace or complement the onboard thrusters of the target spacecraft 2.

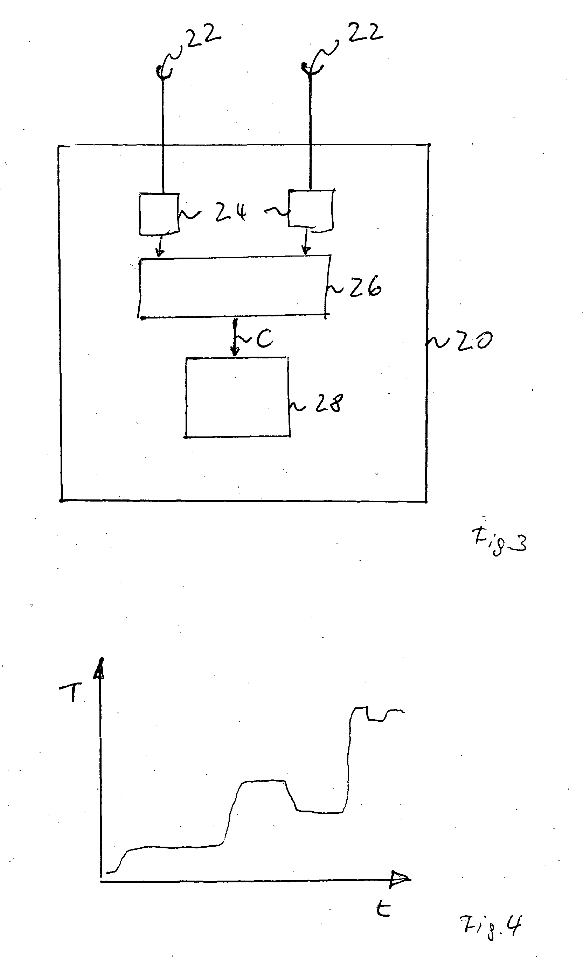

Since the engine module 4 as such is designed without the use of conventional communication systems, alternative and very cost and resource effective communication concept for transmitting command or control signals to the engine module 4 and for receiving data from the engine module 4 is provided. For this purpose, as is schematically shown in Fig. 3, the onboard control system 20 of the engine module 4 comprises a number of sensors 22 that are adjusted to pick up measurement data of a number of physical parameters of the target spacecraft 2. In the embodiment as shown in Fig. 3, the sensors 22 comprise at least one temperature sensor that is to be inserted into the nozzle 14 of the target spacecraft 2 in order to measure the temperature within the nozzle 14. Where associated e./O. modules 24, the sensors 22 are connected with a converter unit 26, which intern data wise is connected to control module 28. The components of the control system 20 as shown in Fig. 3 may be individual hardware components or might also be software modules incorporated into the overall control program which is implemented in the control system 20. Of course, beyond the components as shown in Fig. 3, the control system 20 comprises many more components and modules for specific purposes.

The converter 26 is set up in order to convert a time profile of the selected physical parameter measured by the sensors 22 into two command sequences using a properly designed ASIC (application specific integrated circuit). As a result of this conversion, the converter 26 transmits a control sequence C to the control unit 28 which intern initiates appropriate actions. For example, the converter 26 after extraction from the time profile may deliver command data identifying the activation time and the duration of the activation of the engine module 4 to the control unit 28 which intern carries out appropriate ignition sequences.

In the set-up as shown in Fig. 3, by using a temperature sensor 22 the engine module 4 is configured such that the temperature within the nozzle 14 may be used as a selected physical parameter in order to transmit control data to the engine module 4.

In order to transmit these data to the engine module 4 an intended control sequence or the like, potentially identifying the timing for the activation of the engine module 4 and/or the duration of the ignition and the like, first is encoded into an appropriate time profile of the temperature within the nozzle 14 of the target spacecraft 2. An example of such a time profile is shown in Fig. 4. As a function of time t, in this time profile the temperature T adopts changing values, and the structure of this time profile, i. e. the sequence of consecutive temperature values, may be used to incorporate or embed the desired control sequence according to a certain predefined key algorithm.

After the time profile corresponding to the desired command sequence has been generated, on board actuator systems of the target spacecraft 2 such as heater elements placed in the neighbourhood of the nozzle 14 are operated such that the given time profile of the temperature is actually generated within the nozzle 14. Consequently, the sensors 22 of the engine module 4 pick up the time profile of the temperature in the nozzle 14. This time profile is then forwarded to the converter module 26 which referring back to the pre-defined key algorithm, converts the time profile of the temperature back to the original command sequence. This command sequence is then transmitted to the control unit 28 which intern performs the desired functions.

### Reference numerals

- 1: servicing system
- 2: target spacecraft/target satellite
- 4: engine module
- 6: approach line
- 8: escort module/escort agent
- 10: communication channel
- 12: ground control station
- 14: nozzle
- 20: onboard control system
- 22: sensors
- 24: modules
- 26: converter unit
- 28: control unit
- t: time
- T: temperature

## Claims

1. Engine module for attachment to a selected target spacecraft, comprising a number of sensors adjusted to pick up measured values of a number of physical parameters of the target spacecraft, said sensors being connected with a converter unit which is set up to convert a time profile of the measured values into a set of processable data.

2. Engine module according to claim 1, in which the set of processable data is used as a command sequence for the engine module.

3. Engine module according to claim 1 or 2, in which the set of processable data comprises diagnostic data.

4. Engine module according to one of the claims 1 through 3, in which the number of sensors comprises a temperature sensor.

5. Engine module according to one of the claims 1 through 4, in which the number of sensors comprises a sound and/or a vibration sensor, and/or a sensor for measuring acceleration, inductance, capacitance, magnetic or electromagnetic emissions, modulated or un-modulated signals, and/or vacuum energy.

6. Engine module according to one of the claims 1 through 5, further comprising a number of active elements set up to affect physical parameters of the target spacecraft.

7. Engine module according to claim 7, in which the number of active elements comprises a heating element and/or means for affecting conductance and/or capacitance and/or vibrations and/or sound and/or electromagnetic parameters.

8. Servicing system for providing in-space service operations to a selected target spacecraft, comprising an engine module according to one of the claims 1 through 6, and further comprising a transport module for fetching and attaching to the engine module, the transport module being equipped with communication means for establishing a direct or indirect communication channel with a remote control module.

9. Method for operating an engine module according to one of the claims 1 through 9, in which a desired command sequence or other processable data sequence for the engine module is converted into a digital stream, in sequence varying the time profile of a selected physical parameter of the target spacecraft, selected actuators or active elements of the target spacecraft are operated such that the time profile of the selected physical parameter is generated, the time profile of the said parameter is detected by sensors of the engine module, and in the converter unit the time profile of the said parameter is converted back into the desired command or processable data sequence.

10. Method according to claim 10, in which a temperature of the target spacecraft is selected as physical parameter.

11. Method according to claim 10 or 11, in which a data set generated in a control unit of the engine module is converted into a time profile of a selected physical parameter of the target spacecraft, selected actuator elements of the engine module are operated such that the time profile of the selected physical parameter of the target spacecraft is generated, and the time profile of the selected physical parameter is detected by onboard means of the target spacecraft and forwarded to a diagnosis unit for further analysis or transmission to earth.
